# EUROPÄISCHE PATENTSCHRIFT

(11) **EP 1 033 293 B1**
(45) Veröffentlichungstag und Bekanntmachung des Hinweises auf die Patenterteilung: **18.08.2004**
(21) Anmeldenummer: 00102024.7
(22) Anmeldetag: 02.02.2000
(51) Int. Cl.: B60R 21/20

(54) **Abdeckung für einen Airbagmodul**
Cover for an airbag module
Couvercle pour module de coussin gonflable

(30) Priorität: 04.03.1999 DE 19909458
(43) Veröffentlichungstag der Anmeldung: 06.09.2000
(73) Patentinhaber: Bayerische Motoren Werke Aktiengesellschaft, 80809 München (DE)
(72) Erfinder: Janssen, Robert, 83209 Prien (DE); Hawlitzki, Georg, 85375 Neufahrn (DE); Kauffeld, Lars, 81667 München (DE); Mosenthin, Christoph, 80935 München (DE); Heitl, Ladislaus, 83064 Raubling (DE)

(56) Entgegenhaltungen:
- DE-A- 4 420 929
- DE-A- 19 530 346
- DE-A- 19 624 075
- DE-A- 19 633 109
- DE-A- 19 701 502
- DE-U- 29 722 780
- US-A- 5 060 972
- US-A- 5 312 130
- US-A- 5 398 959
- PATENT ABSTRACTS OF JAPAN vol. 1995, no. 06, 31. Juli 1995 (1995-07-31) -& JP 07 069161 A (INOAC CORP), 14. März 1995 (1995-03-14)

## Beschreibung

Die Erfindung betrifft eine Abdeckung für einen Airbagmodul, bestehend aus einem Deckel, mit dem mindestens ein Fangband einstückig verbunden ist, dessen freier Endbereich an einem Verkleidungsteil eines Kraftfahrzeugs befestigt ist und mit den weiteren Merkmalen des Oberbegriffs von Anspruch 1, wie sie aus der DE-A-195 30 346 oder US-A-5 398 959 bekannt sind.

Ein Airbagmodul für ein Kraftfahrzeug umfaßt im wesentlichen einen Gasgenerator und einen Luftsack, und er ist hinter einer Abdeckung in oder an einem Verkleidungsteil angeordnet. Wenn der Gasgenerator bei einem Aufprall des Kraftfahrzeugs auf ein Hindernis gezündet wird, dann wird der Luftsack aufgeblasen, so daß der Deckel von dem Verkleidungsteil abgesprengt wird. Das Fangband soll verhindern, daß der Deckel in den Innenraum geschleudert wird und möglicherweise einen Fahrgast verletzt. Bei einer bekannten Abdeckung der eingangs genannten Art ist der freie Endbereich des Fangbandes mit einem Verkleidungsteil eines Kraftfahrzeugs kraftschlüssig verbunden. Genauer gesagt der freie Endbereichs des Fangbandes ist zwischen dem Verkleidungsteil und einer Klemmleiste angeordnet, die durch Schrauben mit dem Verkleidungsteil verspannt ist. Eine solche kraftschlüssige Verbindung kann aber durch die Relaxation der Werkstoffe des Verkleidungsteils und/oder des Fangbandes ihre Wirksamkeit verlieren. Die durch die Dehnung der Schrauben erzielbare Vorspannung liegt nämlich im Bereich von 1/10 bis 1/100 mm und kann durch das Setzen oder Kriechen des Werkstoffs des Verkleidungsteils und/oder des Fangbandes kompensiert werden. In diesem Fall geht die kraftschlüssige Verbindung verloren, so daß der Endbereich des Fangbandes zwischen der Klemmleiste und dem Verkleidungsteil herausgezogen werden kann. Zur

Verbesserung der Verbindung des Fangbandes mit dem Verkleidungsteil wurde auch bereits eine kombinierte kraft- und formschlüssige Verbindung vorgeschlagen. Zu diesem Zweck wurde das Fangband mit Löchern versehen, durch die sich die zum Verspannen der Klemmleiste mit dem Verkleidungsteil dienenden Schrauben erstrecken. Diese Maßnahme stellt zwar eine gewisse Verbesserung dar, das Ergebnis ist aber unbefriedigend, weil die Fäden des Fangbandes unter den von den Schrauben ausgeübten Scherkräften brechen können, so daß das Fangband ausreißt.

Weiterhin zeigt die DE 197 01 502 A1 eine Abdeckung für einen Airbagmodul, bestehend aus einem Deckel, mit dem ein oder mehrere plastisch verformbare Scharnierelemente fest verbunden sind, deren freier Endbereich an einem Verkleidungsteil eines Kraftfahrzeugs befestigt ist. Dabei weist jedes Scharnierelement an dem freien Endbereich ein oder mehrere Langlöcher auf, in die jeweils ein Bolzen einsetzbar ist; so dass das Scharnierelement zwischen dem Verkleidungsteil und einem auf dem Bolzen angebrachten Klemmelement verspannt werden kann. Wenn der Deckel beim Zünden des Gasgenerators von der Verkleigdung abgesprengt wird, dann kann er eine kombinierte Schwenk- und Gleitbewegung gegenüber dem Verkleidungsteil ausführen. Neben der Verförmungsarbeit des Scharnierelements wird somit auch Reibungsarbeit bei der Gleitbewegung des Schamlerelements im Bereich der Langlöcher geleistet. Dadurch soll eine verbesserte Energieaufnahme bei der Schwenkbewegung der Abdeckung erreicht werden.

Der Erfindung liegt die Aufgabe zugrunde, die gattungsgemäße Abdeckung hinsichtlich der Befestigung des freien Endbereichs des Fangbandes an einem Verkleidungsteil zu verbessern.

Erfindungsgemäß wird diese Aufgabe dadurch die Merkmale des Anspruchs 1 gelöst.

Wenn der Deckel beim Zünden des Gasgenerators von der Verkleidung abgesprengt wird, dann werden die auf das Fangband ausgeübten Kräfte von der Leiste gleichmäßig aufgenommen, d.h. die Haltekräfte werden über die gesamte Breite des Fangbandes verteilt. Demzufolge werden alle Fäden des Fangbandes in Zugrichtung gleichmäßig belastet.

Die in der Leiste angeordneten Löcher sind in Längsrichtung des Fangbandes orientierte Langlöcher. Diese Langlöcher ermöglichen ein Gleiten der Leiste gegenüber dem Verkleidungsteil, wodurch kritische Belastungsspitzen abgebaut werden.

Die aus Kunststoff bestehende Leiste kann an das Fangband angespritzt oder mit diesem verschweißt sein.

Die Leiste weist vorzugsweise auf ihrer dem Verkleidungsteil zugekehrten Fläche mehrere kegelförmige Vorsprünge auf, wodurch störende Knarzgeräusche infolge einer Flächenberührung vermieden werden.

Bei einer in herstellungstechnischer Hinsicht vorteilhaften Ausführungsform der Erfindung ist vorgesehen, daß das Fangband um eine Querachse umgefaltet ist und seine beiden Enden mit dem Deckel einstückig verbunden sind, daß die Leiste in die von dem Fangband gebildete Tasche eingelegt ist und daß das Fangband mit Löchern versehen ist, die mit den Löchern der Leiste fluchten.

Eine weitere Steigerung der Haltekraft des Fangbandes kann erzielt werden, indem die Leiste mit Längsnuten versehen ist, die in die Löcher münden. Die Materialschwächung im Bereich der Nuten wirkt in der Art einer Knautschzone. Durch die plastische Verformung des geschwächten Bereichs wird Energie abgebaut und die Belastung des Fangbandes reduziert.

Die Bolzen können als Schraube und die Klemmelemente können als Mutter ausgebildet sein. Zur Vereinfachung der Befestigung des Fangbandes an dem Verkleidungsteil können die Schrauben durch eine die Schraubenköpfe bildende Platte verbunden sein. Die Schrauben können mit dem Verkleidungsteil aber auch einstückig verbunden sein.

Zwei Ausführungsbeispiele der Erfindung sind in den Zeichnungen dargestellt und werden im folgenden näher erläutert. Es zeigt:
Fig. 1 eine Draufsicht auf den freien Endbereich eines Fangbandes,
Fig. 2 einen Längsschnitt durch den an einem Verkleidungsteil befestigten freien Endbereich des Fangbandes und
Fig. 3 einen Längsschnitt durch eine abgewandelte Ausführungsform eines Fangbandes.

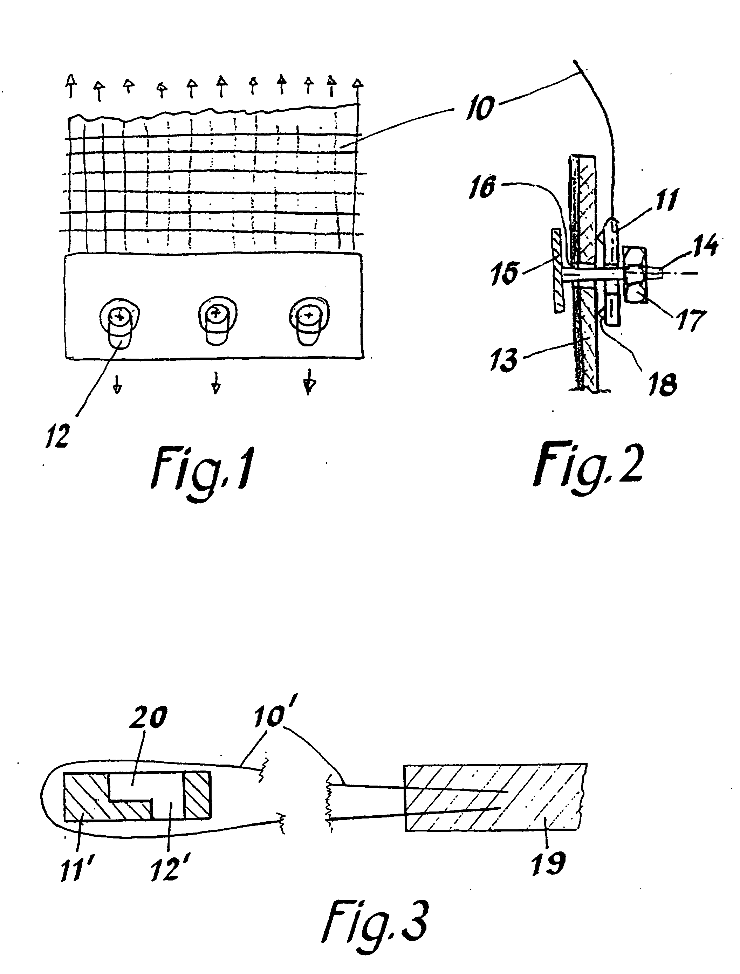

Fig. 1 zeigt den freien Endbereich eines aus Kett- und Schußfäden gewebten Fangbandes 10. Eine Leiste 11 aus Kunststoff ist an den Endbereich des Fangbandes 10 angespritzt. Die Leiste 11 könnte mit dem Fangband 10 aber auch verschweißt sein. Die Leiste 11 sowie das Fangband 10 sind mit drei in Längsrichtung orientierten Langlöchern 12 versehen. Zur Befestigung des Fangbandes 10 an einem Verkleidungsteil 13 eines Kraftfahrzeugs dienen drei Schrauben 14. Die drei Schrauben 14 sind durch eine Platte 15 verbunden, die den Schraubenkopf bildet. Wie aus Fig. 2 ersichtlich ist, werden die Schrauben 14 in entsprechende Bohrungen 16 des Verkleidungsteils 13 eingesetzt, und die Leiste 11 wird mit den Langlöchern 12 auf die Schrauben 14 aufgesteckt. Auf jede Schraube 14 wird eine Mutter 17 aufgeschraubt, so daß die Leiste 11 und das Verkleidungsteil 13 zwischen der Platte 15 und den Muttern 17 verspannt wird. Die Leiste 11 ist auf ihrer dem Verkleidungsteil 13 zugekehrten Fläche mit kegelförmigen Vorsprüngen 18 versehen. Die Leiste liegt daher nicht vollflächig, sondern nur im Bereich der kegelförmigen Vorsprünge 18 an dem Verkleidungsteil 13 an, wodurch Knarzgeräusche vermieden werden.

Wenn auf das Fangband 10 Längskräfte ausgeübt werden, dann werden diese von der Leiste 11 über die Breite des Fangbandes gleichmäßig aufgenommen und in die Schrauben 14 eingeleitet. Falls diese Längskräfte die durch die Einspannung der Leiste 11 bewirkte Reibung übersteigen sollten, dann beginnt die Leiste 11 gegenüber dem Verkleidungsteil 13 zu rutschen, weil sich die Schrauben 14 in den Langlöchern 12 der Leiste 11 bewegen können. Durch diese Rutschbewegung der Leiste können übermäßige Spannungsspitzen, die zu einer Beschädigung des Fangbandes 11 führen könnten, abgebaut werden.

In Fig. 3 ist eine abgewandelte Ausführungsform einer Leiste 11' und ihrer Befestigung an dem Fangband 10' gezeigt. Das Fangband 10' ist um eine Querachse umgefaltet, und seine beiden Enden sind in einen Deckel 19 aus Kunststoff eingebettet. Die Leiste 11' ist in die von dem Fangband 10' gebildete Tasche lose eingelegt. Die obere und die untere Lage des Fangbandes 10' ist mit Langlöchern versehen, die mit den Langlöchern 12' der Leiste 11' fluchten. Die Leiste 11' ist mit Nuten 20 versehen, die in die Langlöcher 12' münden. Der geschwächte Querschnitt der Leiste 11' im Bereich der Nuten 20 bildet eine Knautschzone. Wie dies bereits erläutert wurde, kann die Leiste 11' wegen der Langlöcher 12' gegenüber dem (nicht gezeigten) Verkleidungsteil eine Gleitbewegung ausführen. Wenn im Laufe dieser Gleitbewegung die Schrauben am hinteren Ende der Langlöcher ankommen, dann kann die Leiste 11' plastisch verformt werden, wobei das verdrängte Material in den Bereich der Nuten 20 ausweicht. Durch diese plastische Verformung können Spannungsspitzen abgebaut werden, so daß die Befestigung des Fangbandes 10 am Deckel 19 einerseits und an dem (nicht gezeigten) Verkleidungsteil andererseits nicht beeinträchtigt wird. Diese Wirkung kann auch erreicht werden, indem die Langlöcher mit einer bestimmten Wandstärke ausgespritzt werden.

Abweichend von den beiden gezeigten Ausführungsbeispielen könnten die Schrauben auch als glattwandige Bolzen ausgebildet sein, auf denen anstelle einer Mutter ein Klemmring oder dergleichen angebracht ist. Die Schrauben oder die Bolzen könnten mit dem Verkleidungsteil auch einstückig verbunden sein.

## Patentansprüche

1. Abdeckung für einen Airbagmodul, bestehend aus einem Deckel, mit dem mindestens ein Fangband einstückig verbunden ist, dessen freier Endbereich an einem Verkleidungsteil eines Kraftfahrzeugs befestigt ist, wobei an dem freien Endbereich des Fangbandes (10, 10') eine Leiste (11, 11') befestigt ist, die mehrere Löcher (12, 12') aufweist, in die jeweils ein Bolzen (14) einsetzbar ist, so dass die Leiste (11, 11') zwischen dem Verkleidungsteil (13) und einem auf dem Bolzen (14) angebrachten Klemmelement (17) verspannt werden kann, **dadurch gekennzeichnet, dass** die in der Leiste (11, 11') angeordneten Löcher in Längsrichtung des Fangbandes (10, 10') orientierte Langlöcher (12, 12') sind.

2. Abdeckung nach Anspruch 1, **dadurch gekennzeichnet, dass** die Leiste (11') mit Längsnuten (20) versehen ist, die in die Löcher (12') münden.

3. Abdeckung nach Anspruch 1 oder 2, **dadurch gekennzeichnet, dass** die Bolzen als Schraube (14) und das Klemmelement als Mutter (17) ausgebildet sind.

4. Abdeckung nach Anspruch 3, **dadurch gekennzeichnet, dass** die Schrauben (14) durch eine die Schraubenköpfe bildende Platte (15) miteinander verbunden sind.

5. Abdeckung nach Anspruch 3, **dadurch gekennzeichnet, dass** die Schrauben mit dem Verkleidungsteil einstückig verbunden sind.

## Claims

1. An airbag module cover comprising a lid integrally connected to at least one catch strap having a free end region fastened to a part of the moulding of a motor vehicle, wherein a strip (11, 11') fastened to the free end region of the catch strap (10, 10') is formed with a number of holes (12, 12') into each of which a bolt (14) is insertable, so that the strip (11, 11') can be clamped between the moulding part (13) and a clamping element (17) mounted on the bolt (14), **characterised in that** the holes formed in the strip (11, 11') are slots (12, 12') extending in the longitudinal direction of the strap (10, 10').

2. A cover according to claim 1, **characterised in that** the strip (11') is formed with longitudinal grooves (20) which open into the holes (12').

3. A cover according to claim 1 or claim 2, **characterised in that** the bolts are screws (14) and the clamping element is a nut (17).

4. A cover according to claim 3, **characterised in that** the screws (14) are connected by a plate (15) which forms the screw heads.

5. A cover according to claim 3, **characterised in that** the screws are integrally connected to the moulding part.

## Revendications

1. Recouvrement pour un module de coussin gonflable de sécurité composé d'un couvercle auquel est reliée en une seule pièce au moins une sangle de sécurité dont la région d'extrémité libre est fixée à une partie de garniture intérieure d'un véhicule automobile, cependant qu'à la région d'extrémité libre de la sangle de sécurité (10, 10'), est fixée une barrette (11, 11') qui présente plusieurs trous (12, 12') dans chacun desquels peut être insérée une cheville (14), de sorte que la barrette (11, 11') peut être serrée entre la partie de garniture intérieure (13) et un élément de serrage (17) monté sur la cheville (14),
**caractérisé en ce que**
les trous formés dans la barrette (11, 11') sont des trous allongés (12, 12') orientés dans la direction longitudinale de la sangle de sécurité (10, 10').

2. Recouvrement selon la revendication 1,
**caractérisé en ce que**
la barrette (11') est munie de rainures longitudinales (20) qui débouchent dans les trous (12').

3. Recouvrement selon la revendication 1 ou 2,
**caractérisé en ce que**
les chevilles sont constituées par des vis (14) et l'élément de serrage par un écrou (17).

4. Recouvrement selon la revendication 3,
**caractérisé en ce que**
les vis (14) sont reliées entre elles par une plaque (15) qui forme les têtes des vis.

5. Recouvrement selon la revendication 3,
**caractérisé en ce que**
les vis sont reliées en une seule pièce à la partie de garniture intérieure.
